# EUROPÄISCHE PATENTSCHRIFT

(11) **EP 1 027 801 B1**
(45) Veröffentlichungstag und Bekanntmachung des Hinweises auf die Patenterteilung: **20.06.2001**
(21) Anmeldenummer: 97910190.4
(22) Anmeldetag: 07.11.1997
(51) Int. Cl.: H04M 15/00

(54) **VERRECHNUNGSVERFAHREN IN EINEM TELEKOMMUNIKATIONSSYSTEM**
CLEARING METHOD IN A TELECOMMUNICATION SYSTEM
PROCEDE DE COMPENSATION DANS UN SYSTEME DE TELECOMMUNICATIONS

(43) Veröffentlichungstag der Anmeldung: 16.08.2000
(73) Patentinhaber: Swisscom Mobile AG, 3050 Bern (CH)
(72) Erfinder: RITTER, Rudolf, CH-3052 Zollikofen (CH)
(74) Vertreter: BOVARD AG - Patentanwälte
(86) Internationale Anmeldenummer: CH9700426
(87) Internationale Veröffentlichungsnummer: WO9925111

(56) Entgegenhaltungen:
- EP-A- 0 656 733
- EP-A- 0 734 144
- EP-A- 0 785 534
- EP-A- 0 790 587
- WO-A-95/28062
- WO-A-97/40616

## Beschreibung

Die vorliegende Erfindung bezieht sich auf ein Verrechnungsverfahren in einem Telekommunikationssystem. Die Erfindung betrifft insbesondere, aber nicht ausschliesstich, ein.Verrechnungsverfahren, das mit einer SIM-Karte ausgeführt werden kann, sowie eine entsprechende SIM-Karte.

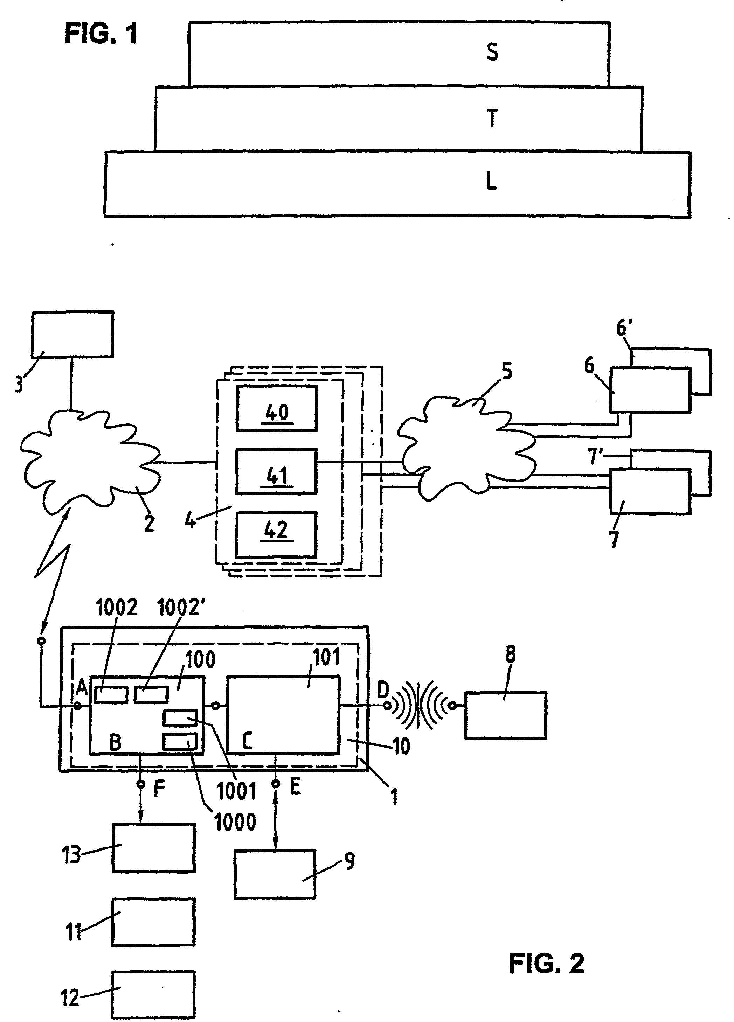

Die Erfindung geht aus der Feststellung hervor, dass die für die Benutzung von Ressourcen in einem Telekommunikationsnetz verrechneten Gebühren in drei Schichten eingeteilt werden können (Figur 1).

In der untersten Schicht L liegen die Lizenzgebühren, die an verschiedene Lizenzgeber für die Benutzung von geschützten Hardware- und Software-Ressourcen bezahlt werden müssen. Jede Ressource in einem Teiekommunikationssystem kann einer Lizenzabgabe unterzogen werden. Der Netzbetreiber bezahlt im allgemeinen diese Lizenzgebühren den Lizenzgebem; der Endbenutzer bezahlt dagegen diese Lizenzgebühr nur indirekt, mit den dem Netzwerkbetreiber bezahlten Verkehrsgebühren.

In der mittleren Schicht T liegen die Verkehrsgebühren. Diese Schicht betrifft die normalen Telekommunikationsgebühren, die der Benutzer eines Telekommunikationsnetzes beispielsweise für ein Gespräch oder eine Datenübertragung an den Netzwerkbetreiber bezahlt. In klassischen Systemen wird dieser Vergebührungsprozess in einer Zentrale im Netz vollzogen. Es sind jedoch auch schon Prepaid-Systeme bekannt, bei welchen dieser Prozess zum Beispiel in einer Chip-Karte des Benutzers erfolgen kann. Im GSM-Mobilfunknetz beispielsweise wird ein unter der Bezeichnung AOC (Advice of Charge) bekannter Dienst für die Ermittlung der Verkehrsgebühren verwendet Ein anderes System ist ausserdem im Patentdokument EP656733 beschrieben.

In der Patentanmeldung WO 97/40616 wird ein Verfahren, eine Smartcard und ein System beschrieben, welche es Benutzem ermöglichen drahtlose Telefone anonym zu benützen und die Bezahlung für Telefongespräche ohne Abonnemente durchzuführen. Dies wird gemäss WO 97/40616 dadurch erreicht, dass eine erweiterte SIM-Karte des Telefons mit einer vorausbezahlten Karte kooperieren kann, wobei die SIM-Karte insbesondere die Anzahl verbleibender vorausbezahlten Einheiten von der vorausbezahlten Karte entgegennehmen kann und gegebenenfalls, nach der Ausführung von Sicherheitsüberprüfungen und bei ausreichenden vorausbezahlten Einheiten, das Telefon im Netzwerk zulassen kann. Die Gebühren für Telefongespräche können anhand von in der SIM-Karte gespeicherten Tariftabellen und der im Telefon gemessenen Gesprächsdauer bestimmt werden, wobei entsprechend den bestimmten Gebühren Einheiten von den in der vorausbezahiten Karte gespeicherten Einheiten subtrahiert werden.

Die oberste Schicht S betrifft die Dienstgebühren. Diese Gebühren werden für die Benutzung von nicht vom Netzbetreiber angebotenen Diensten erhoben. Sie werden meistens von verschiedenen Dienstanbietem für unterschiedliche Dienste, die nicht direkt die Verkehrsabwicklung betreffen, verrechnet und einkassiert.

Erfindungsgemäss werden diese verschiedenen Gruppen von Gebühren unabhängig und getrennt ermittelt und verrechnet.

Vorzugsweise wird der Verrechnungsprozess für die Ermittlung und Verrechnung dieser drei Gebührenschichten in der SIM-Karte des Benutzers ausgeführt.

Das erfindungsgemässe Verrechnungsverfahren, um die Benutzung von nicht für die Verkehrsabwicklung zuständigen Ressourcen verzugebühren, erfolgt mit einem Zähler in der SIM-Karte, der bei jeder Benutzung dieser Ressource inkrementiert wird. Der verzugebührende Betrag wird dann aus dem Zählerwert ermittelt und dem Benutzer belastet.

Sowohl Software- als auch Hardware-Ressourcen können mit diesem Verfahren vergebührt werden. Beispielsweise können für die Benutzung von kontaktlosen Schnittstellen in der SIM-Karte eine oder mehrere Gebühren erhoben werden. Es ist auch möglich Ressourcen, die für die Benutzung der SIM-Karte als Identifizierungskarte in einem anderen System zuständig sind, verzugebühren. Mehrere Ressourcen auf der SIM-Karte können ausserdem unabhängig vergebührt werden.

Der vergebührte Betrag kann von der Anzahl der Benutzungen einer bestimmten Ressource abhängen, und/oder von der Benutzungsdauer dieser Ressource.

Dieses Verfahren kann beispielsweise eingesetzt werden, um eine Lizenzgebühr für die Benutzung einer patentgeschützten Ressource zu ermitteln und zu erheben. Es ist aber auch möglich, die Benutzung von durch einen externen Dienstanbieter angebotenen Ressourcen verzugebühren.

Der vergebührte Betrag kann aus einem Prepaid-Konto der SIM-Karte belastet werden. In einer Variante wird ein Belastungsbeleg mit dem verzugebührenden Betrag vorbereitet und an eine Belastungszentrale (SFC, Sub-Fee-Collector) im Telekommunikationsnetz übermittelt. Diese Übermittlung erfolgt vorzugsweise erst dann, wenn der vom Zähler gezählte Betrag einen vordefinierten Betrag übersteigt. Vorzugsweise werden diese Belastungsbelege mittels speziellen SMS-Meldungen durch das genannte Telekommunikationsnetz übertragen.

Der verzugebührende Betrag ist vorzugsweise abhängig von einer in der Karte gespeicherten Gebührentabelle. Diese Tabelle kann vorzugsweise vom Dienstanbieter bzw. vom Lizenzgeber oder vom Netzbetreiber ergänzt oder geändert werden.

Die Erfindung erlaubt es, Lizenzgebühren direkt beim Endbenutzer statt beim Netzbetreiber zu erfassen. Damit können neue Lizenzabkommen gestaltet werden. Das Verfahren der Erfindung bietet daher für den Benutzer eine transparentere Verrechnung, und ist flexibler für den Lizenzgeber oder Dienstanbieter. Ausserdem erlaubt die Erfindung eine gerechtere Verrechnung, da Grossbenutzer mehr Gebühren zahlen als Benutzer, die eine bestimmte Ressource seltener oder nie verwenden.

Das Verfahren gemäss der Erfindung hat weiter den Vorteil, dass verschiedene Dienstanbieter und Lizenzgeber ihre Dienste über das Mehrschichtenmodell frei über unterschiedliche Prozesse anbieten und verrechnen können. Das Verfahren ermöglicht ausserdem eine massive Kostensenkung, weil alle aufgeführten Prozesse vollständig automatisch ablaufen können.

Die vorliegende Erfindung wird mit Hilfe der Beschreibung besser verständlich, welche als Beispiel angeführt ist und durch die Figuren dargestellt wird, wobei:
Die Figur 1 die Schichtstruktur der Tarifierung zeigt.
Die Figur 2 ein Blockschema eines erfindungsgemässen Systems zeigt.

Mit dem Bezugszeichen 1 ist ein Endgerät dargestellt, zum Beispiel ein GSM-Mobilfunktelefon, oder ein Computer mit Kommunikationsmöglichkeiten. Das Gerät 1 enthält eine SIM-Karte 10 (Subscriber ldentity Module), die den Benutzer im Telekommunikationsnetz 2 identifiziert. SIM-Karten werden jetzt schon unter anderem in GSM-, DCS-, oder PCS-Mobilgeräten eingesetzt, oder auch in zukünftigen Fixnetzen mit Teilnehmeridentifizierung durch Chipkarten. Die SIM-Karte kann entweder eine Full-Size Karte oder eine Plug-in Karte sein; sie wird durch ein Kontaktgebiet auf der Oberfläche der Karte mit dem Endgerät 1 verbunden. Die SIM-Karte 10 enthält Datenverarbeitungsmittel 100, zum Beispiel einen bekannten GSM-SIM-Prozessor. SIM-Karten sind zum Beispiel in der technischen Spezifikation GSM 11.11 oder GSM 11.14 beschrieben, die seit 1995 bzw. 1996 beim Sekretariat des European Telecommunications Standards Institute, F-06921 Sophia Antipolis, erhältlich sind.

Ein Speicherbereich, vorzugsweise eine EEPROM, ist im Prozessor 100 enthalten oder mit diesem Prozessor verbunden. Der Speicherbereich enthält Programme und Dateien, die in einer hierarchischen Verzeichnisstruktur organisiert sind. Die Dateien umfassen unter anderem Elementary Files EF, wie in den oben erwähnten technischen Spezifikationen GSM 11.11 oder GSM 11.14 definiert.

Die SIM-Karte enthält ausserdem bekannte Mittel, um SMS-Kurzmeldungen zu senden und zu empfangen, sowie vorzugsweise bekannte Filtermittel, um spezielle Kurzmeldungen zu erkennen und zwischenzuspeichern, vorzugsweise gemäss dem SICAP-Verfahren, das unter anderem im Patent EP 0689 368 B1 beschrieben ist. Verschlüsselung und Signierungsmittel sind ausserdem vorzugsweise vorhanden, um empfangene SMS-Meldungen zu entschlüsseln und gesandte SMS-Meldungen zu verschlüsseln und zu signieren. Als Verschlüsselungsverfahren kann beispielsweise das TTP-Verfahren (Trusted Third Party) eingesetzt werden, oder auch Entschlüsselungsmittel, die nach einem Point-to-Point-Verfahren arbeiten.

Die SIM-Karte enthält ausserdem eine oder mehrere Ressourcen, für deren Benutzung eine oder mehrere Gebühren bezahlt werden müssen. Eine Ressource kann zum Beispiel eine neue Softwareanwendung sein, die im Speicherbereich des Prozessors 100 gespeichert wird, oder neue Hardware-Ressourcen, die die Funktionalitäten der SIM-Karte 10 erweitern, oder eine Kombination von Software- und Hardware-Elementen. Im dargestellten Beispiel enthält die SIM-Karte eine induktive Schnittstelle D (zum Beispiel eine Spule), mit der sie kontaktlos mit externen Geräten 8 kommunizieren kann. Das externe Gerät 8 kann beispielsweise ein Access-Control-System, oder ein Transaktionssystem (POS, Point of Sale) sein. Der SIM-Mikrokontroller 100 wird vorzugsweise mit einem anderen Elektronikmodul 101 ergänzt, welches mit der induktiven Spule verbunden und für die kontaktlose Kommunikation mit der externen Vorrichtung 8 zuständig ist Damit kann die SIM-Karte 10 im Mobilgerät 1 über die induktive Schnittstelle D mit dem externen Gerät 8 kommunizieren. In einer Variante umfasst das Gehäuse des Mobilgeräts 1 eine infrarote Schnittstelle E, mit der die Karte 10 mit anderen externen Geräten 9 kommunizieren kann.

Als andere mögliche neue Ressource kann beispielsweise eine neue zusätzliche Identifeierungsparameter-Tabelle 1000 vorgesehen werden, mit der die SIM-Karte als Identifizierungskarte in anderen Systemen verwendet werden kann, zum Beispiel in einem Pay-TV oder Pay-Radio System 13, in einem Computernetz 11 und/oder in weiteren Systemen 12.

Lizenz-, Verkehrs- und/oder Dienst-Gebühren müssen für die Benutzung von folgenden Ressourcen auf der dargestellten SIM-Karte 10 bezahlt werden:
- Kommunikation durch das GSM-Netz (A-B)
- Schnittstelle (B-C) zwischen dem SIM-Prozessor 100 und dem Kommunikationsprozessor 101.
- Induktive Schnittstelle C-D zwischen der SIM-Karte 10 und einem externen Gerät 8.
- Infrarote Schnittstelle C-E zwischen dem Endgerät 1 und einem externen Gerät 9.
- Identifizierungstabelle für andere Systeme, um die SIM-Karte 10 als ldentifizierungskarte in anderen Systemen zu benützen (Schnittstelle B-F).

Die Erfindung ist jedoch nicht auf die Vergebührung von diesen speziellen neuen Ressourcen beschränkt; sie kann auch angewendet werden, um jegliche mögliche, von externen Dienstanbietem 3 oder Lizenzgebem angebotenen Ressourcen in der SIM-Karte verzugebühren. Eine Software-Ressource, entsprechend einem neuen Dienst, kann beispielsweise aus einem Katalog, aus dem Internet usw. vom Benutzer ausgewählt werden und mit speziellen Kurzmeldungen in die SIM-Karte des Benutzers nachgeladen werden. Der Dienstanbieter wird dann für die Benutzung dieses Dienstes mit dem erfindungsgemässen Verfahren bezahlt. Es ist sogar mit diesem Verfahren möglich, die Benutzung von Ressourcen ausserhalb der SIM-Karte verzugebühren, zum Beispiel im Mobilgerät 1 oder gar in einer externen Vorrichtung 11 bis 13, die nicht ständig mit der SIM-Karte verbunden ist. In diesem letzten Fall ist es nötig, die Benutzungsparameter, beispielsweise die Anzahl oder Dauer der Benutzungen, in die SIM-Karte zu übermitteln, wenn die Karte mit dieser externen Vorrichtung verbunden ist.

Erfindungsgemäss enthält die SIM-Karte 10 zusätzlich einen oder mehrere neue Zähler 1002, 1002'. Jeder Zähler entspricht einer oder mehreren verzugebührenden Ressourcen, und wird jedesmal inkrementiert, wenn diese Ressourcen benutzt werden. Die Zähler können Hardware- und/oder Software-Mittel enthalten. In einer bevorzugten Variante umfasst jedoch jeder Zähler eine Datei (Elementary Files EF) im Speichergebiet des SIM-Prozessors 100, sowie ein Inkrementierungsprogramm, vorzugsweise eine neue EXE-Datei im selben Speichergebiet, das diese Datei bei der Benutzung der entsprechenden Ressource inkrementiert. Die Zähler können ein Teil der Ressource sein; wenn die Ressource beispielsweise eine Software-Ressource ist, kann sie selber bestimmen, wie oft sie benutzt wird und welche Gebühren bezahlt werden müssen.

Die Benutzung von einer bestimmten Ressource kann mehreren Gebühren unterzogen werden, insbesondere einer Lizenzgebühr, einer Verkehrsgebühr und einer Dienstgebühr. Diese verschiedenen Gebühren werden im Allgemeinen an verschiedene Empfänger bezahlt Die Lizenzgebühr wird für einen Lizenzgeber bestimmt, die Verkehrsgebühr für einen Netzbetreiber und die Dienstgebühr für einen Dienstanbieter. Für jede Ressource können daher mehrere, den verschiedenen Gebühren entsprechende Zähler eingesetzt werden.

Der Gebührenbetrag, der für die Benutzung einer bestimmten Ressource erhoben wird, kann von der Anzahl der Benutzungen oder von der Benutzungsdauer abhängig sein. In diesem letzten Fall nimmt der Zähler bei der Benutzung dieser Ressource pro vordefinierter Zeitspanne zu, zum Beispiel jede Minute.

Lizenzgebühren, die für die Benutzung einer bestimmten Ressource in der Karte erhoben werden, sind im Prinzip festgelegt; bestimmte Benutzer können jedoch von einem speziellen Tarif profitieren. Die Beträge für die Verkehrsgebühren und für die Dienstgebühren sind im Gegenteil vorzugsweise dienstabhängig. Diese verschiedenen Benutzer- und/oder dienstabhängigen Beträge werden in einer Gebührentabelle 1001 in der SIM-Karte gespeichert, die, wie weiter unten erklärt, aus einer anderen Stelle im Telekommunikationsnetz eingestellt, geändert, ergänzt oder gelöscht werden kann. Dadurch können dienstabhängige Gebühren erhoben werden.

Die SIM-Karte 10 ist mit einem Telekommunikationsnetz 2, beispielsweise einem GSM-Netz, über eine Schnittstelle A verbunden, wenn sie im Endgerät 1 steckt. Ein SIM-Server 4 ist ebenfalls an das Netz 2 angeschlossen und enthält eine SSC-Zentrale 41 zur Verwaltung von Kurzmeldungen (SSC, Short Message Service Center); die SSC-Zentrale 41 ist so ausgestattet, dass sie mit der SIM-Karte 10 mittels speziellen SMS-Kurzmeldungen über das Netz 2 kommunizieren kann. Bekannte Filtermittel in der Zentrale 41 und in den SIM-Karten 10 erlauben es, spezielle Dienste, wie den Austausch von Dateien, Instruktionen und Programmen zwischen dem SIM-Server und einer SIM-Karte auszuführen. Vorzugsweise enthält ausserdem der SIM-Server 4 einen TTP-Server 40, um die Kommunikation zwischen der Zentrale 41 und den SIM-Karten 10 im Netz zu verschlüsseln und zu signieren. Dadurch wird versichert, dass die Vertraulichkeit, Authentizität der Identität, Authentizität der Information, Integrität und Nichtabstreitbarkeit des Ursprungs der verschiedenen Mitteilungen gewährleistet sind. Ein Point-to-Point Verschlüsselungs- und Signierungs-Verfahren kann aber auch eingesetzt werden.

Mit verschlüsselten speziellen SMS-Kurzmeldungen können der Netzbetreiber und/oder die verschiedenen Dienstanbieter und Lizenzgeber die Gebührentabelle 1002 in den schon verteilten SIM-Karten ergänzen oder anpassen. Eine Tarifänderung erfolgt dann auf einfache Weise, indem diese Gebührentabellen in den SIM-Karten angepasst werden, wie schon in der Patentanmeldung EP734144 beschrieben wurde. Ähnlich werden die erhobenen Gebühren mit SMS-Meldungen an die Empfänger übermittelt, wie weiter unten erklärt wird.

Der SIM-Server 4 enthält ausserdem mindestens einen Sub-Fee-Collector SFC 42, in dem die verschiedenen gesammelten Gebühren zwischengespeichert und aufbereitet werden. Ein verschiedener Sub-Fee-Collector ist für jeden Netzbetreiber vorgesehen, der auch über einen SIM-Server verfügt.

Der SIM-Server 4 ist durch ein Netz 5, zum Beispiel durch ein Inter-, Intra- oder Extranet oder ein X.25-Netz mit verschiedenen Main-Fee-Collectors MFC 6, 6', 7, 7' verbunden. Diese Main-Fee-Collectors werden durch verschiedene Lizenzgeber und Dienstanbieter betrieben. Sie umfassen Servers, die die für sie bestimmten und von den Sub-Fee-Collectors empfangenen und sortierten Beträge abrufen und an ein nicht dargestelltes Buchführungssystem zuführen, zum Beispiel an eine Bank oder an ein Finantinstitut. Die Kommunikation zwischen den SFC und den MFC wird signiert und vorzugsweise zusätzlich verschlüsselt.

Wenn eine Ressource, für die eine oder mehrere Gebühren bezahlt werden muss, beispielsweise eine der oben erwähnten Ressourcen, benutzt wird, wird der entsprechende Zähler inkrementiert. Das Inkrement kann fix sein oder beispielsweise von der Benutzungsdauer oder von anderen Parametern abhängen, zum Beispiel von der Tageszeit, vom Wochentag, vom Standort, von einer Benutzerkategorie usw. Das Inkrement kann auch von der Gebührentabelle 1002 abhängen. Die Benutzung von einer einzigen Ressource kann ausserdem die Inkrementation von mehreren Zählem bewirken, zum Beispiel von einem ersten Zähler für die Lizenzgebühren, von einem zweiten Zähler für die Verkehrsgebühren, und von einem dritten Zähler für die Dienstgebühren.

Die erhobenen Gebührenbeträge sind manchmal sehr klein; insbesondere der Betrag für die Lizenzgebühren, die für die Benutzung einer bestimmten Ressource in der Karte erhoben werden, kann klein sein. Um eine grosse Anzahl von Transaktionen mit kleinen Beträgen zu verhindern, werden vorzugsweise diese Beträge den Benutzern nicht sofort belastet. Hierzu wird der vom Zähler gezählte Betrag mit einem in der Karte gespeicherten vordefinierten Betrag verglichen, und die Belastung erfolgt erst, wenn der vom Zähler gezählte Betrag den vordefinierten Betrag übersteigt. Falls der Inkrementationsschritt nicht die Gebührentabelle berücksichtigt, wird dieser gezählte Betrag mit der Gebührentabelle 1002 in einen Belastungsbetrag umgewandelt.

SIM-Karten, die einen vorbezahlten Geldbetrag enthalten, sind im GSM-Umfeld bereits allgemein bekannt. Diese Karten können nachgeladen werden, indem ein Geldbetrag dem Netzbetreiber bezahlt wird. In diesen Karten können die für den Netzbetreiber bestimmten Gebühren direkt diesem gespeicherten Geldbetrag belastet werden.

Die meisten Gebühren werden jedoch nicht einem kartenintemen Konto belastet. Statt dessen wird ein Belastungsbeleg mit dem verzugebührenden Betrag vorbereitet, und während oder nach einer Benutzung zum Sub-Fee-Collector des SIM-Servers 4 übertragen. Vorzugsweise wird aber ein Belastungsbeleg erst dann vorbereitet und übertragen, wenn der Zählerwert den vordefinierten Betrag übersteigt, oder erst nach einer vordefinierten Anzahl von Benutzungen. In einer Variante wird dieser Beleg nicht von der SIM-Karte 10 ausgesendet, sondern periodisch von dem Sub-Fee-Collector 42 abgerufen.

Die übermittelten Belastungsbelege können je nach Dienst angepasst werden, und enthalten beispielsweise folgende Aussage: Übermittelter Betrag, Benutzer, Empfänger, Pre- oder Postpaidprozess, Standort, Zeit usw. Wie der Fachmann auch erkennen wird, können mehrere Beträge, entsprechend mehreren Zählern 1002, 1002', in einem einzigen Belastungsbeleg gruppiert und übertragen werden.

Der Sub-Fee-Collector 42 empfängt die Belastungsbelege von verschiedenen SIM-Karten 10 im Netz 2, und ordnet sie nach Empfänger. Der Empfänger kann ein Lizenzgeber oder ein Dienstanbieter, der einen Main-Fee-Collector 6, 6' bzw. 7, 7' betreibt, oder der Netzbetreiber des Telekommunikationsnetzes 2 sein. Vorzugsweise jedoch wird auch im Falle einer Lizenz- oder Dienstgebühr ein Teil des übermittelten Gebührenbetrages für den Netzbetreiber bestimmt, und nur ein Teil als Lizenz- oder Dienstgebühr weiterverteilt.

Die durch den Sub-Fee-Collector 42 sortierten und behandelten Beträge werden durch das Netz 5 an den entsprechenden Main-Fee-Collector 6, 6', 7, 7' des entsprechenden Finanzinstituts weitergeleitet. Diese Beträge können entweder periodisch ausgesendet oder zum Abruf durch diese Main-Fee-Collector bereitgestellt werden.

Es können Main-Fee-Collectors für alle Gebührenarten eingesetzt werden. So können beispielsweise verschiedene Gebühren je nach Dienst, Verkehrsart (Sprache, Daten, Multimedia) oder Lizenzart vom zuständigen Collector erfasst werden.

Es ist ebenfalls möglich, die Belastungsbelege an den Empfänger durch die kontaktlose Schnittstelle D oder E zu übermitteln. In diesem Fall muss der Empfänger mit der externen Vorrichtung 8 bzw, 9 verbunden werden.

Wie schon erwähnt, wird das bereits allgemein bekannte TTP-Verfahren für die Signierung und Verschlüsselung von übertragenen Daten und Meldungen im System verwendet.

## Patentansprüche

1. Verrechnungsverfahren, um die Benutzung von nicht für die Verkehrsabwicklung zuständigen Ressourcen (A-F) in einer SIM-Karte (10) in einem Telekommunikationsnetz (2) dem Benutzer verzugebühren, dadurch gekennzeichnet,
dass dem Benutzer Software-Ressourcen und/oder Hardware-Ressourcen der SIM-Karte (10) vergebührt werden,
dass mindestens ein Zähler in der SIM-Karte inkrementiert wird, wenn eine benannte vergebührte Software-Ressource und/oder Hardware-Ressource auf der SIM-Karte (10) benutzt wird, und
dass aus dem Zählerwert der verzugebührende Betrag ermittelt wird, der einer Dienstgebühr und/oder einer Lizenzgebühr entspricht.

2. Verrechnungsverfahren gemäss Anspruch 1, dadurch gekennzeichnet, dass mindestens eine vergebührte Ressource eine kontaktlose Schnittstelle (A-F) ist.

3. Verrechnungsverfahren gemäss einem der vorhergehenden Ansprüche, dadurch gekennzeichnet, dass mindestens eine vergebührte Ressource für die Benutzung der SIM-Karte (10) in einem anderen System (11, 12, 13) zuständig ist.

4. Verrechnungsverfahren gemäss einem der vorhergehenden Ansprüche, dadurch gekennzeichnet, dass mehrere Ressourcen (A-F) auf der SIM-Karte (10) unabhängig vergebührt werden können.

5. Verrechnungsverfahren gemäss einem der vorhergehenden Ansprüche, dadurch gekennzeichnet, dass mindestens ein Zähler in Abhängigkeit der Benutzungsdauer der entsprechenden vergebührten Ressource inkrementiert wird.

6. Verrechnungsverfahren gemäss einem der vorhergehenden Ansprüche, dadurch gekennzeichnet, dass mindestens eine vergebührte Ressource patentgeschützt ist und dass der vergebührte Betrag einer Lizenzgebühr für die Benutzung dieser Ressource entspricht.

7. Verrechnungsverfahren gemäss einem der vorhergehenden Ansprüche, dadurch gekennzeichnet, dass mindestens eine vergebührte Ressource von einem externen Dienstanbieter (3) angeboten wird, und dass der vergebührte Betrag einer Dienstgebühr für die Benutzung des angebotenen Dienstes entspricht.

8. Verrechnungsverfahren gemäss einem der vorhergehenden Ansprüche, dadurch gekennzeichnet, dass bei der Benutzung von mindestens einer einzigen Ressource mehrere Zähler (1002, 1002'), die verschiedenen Arten von Gebühren entsprechen, inkrementiert werden.

9. Verrechnungsverfahren gemäss einem der vorhergehenden Ansprüche, dadurch gekennzeichnet, dass der verzugebührende Betrag auf einem Mobilgerät (1), in dem die SIM-Karte (10) eingesetzt ist, angezeigt werden kann.

10. Verrechnungsverfahren gemäss einem der vorhergehenden Ansprüche, dadurch gekennzeichnet, dass der verzugebührende Betrag einem Prepaid-Konto auf der SIM-Karte belastet wird.

11. Verrechnungsverfahren gemäss einem der vorhergehenden Ansprüche, dadurch gekennzeichnet, dass ein Belastungsbeleg mit dem verzugebührenden Betrag vorbereitet wird und an eine Belastungszentrale (42) im benannten Telekommunikationsnetz (2) übermittelt wird.

12. Verrechnungsverfahren gemäss dem vorhergehenden Anspruch, dadurch gekennzeichnet, dass der vom Zähler gezählte Betrag mit einem vordefinierten Betrag verglichen wird, und dass der genannte Belastungsbeleg erst vorbereitet wird, wenn der vom Zähler gezählte Betrag den vordefinierten Betrag übersteigt.

13. Verrechnungsverfahren gemäss einem der Ansprüche 11 oder 12, dadurch gekennzeichnet, dass die Belastungsbelege mit SMS-Meldungen durch das genannte Telekommunikationsnetz übermittelt werden.

14. Verrechnungsverfahren gemäss einem der vorhergehenden Ansprüche, dadurch gekennzeichnet, dass der verzugebührende Betrag in Abhängigkeit von einer in der Karte gespeicherten Gebührentabelle (1000) ermittelt wird.

15. Verrechnungsverfahren gemäss dem vorhergehenden Anspruch, dadurch gekennzeichnet, dass die benannte Gebührentabelle (1000) ferngesteuert mit SMS-Meldungen aus einem anderem Punkt im benannten Telekommunikationsnetz (2) geändert werden kann.

16. SIM-Karte (10) für Benutzer eines Telekommunikationsnetzes (2), die in wegnehmbarer Weise in ein Endgerät (1) eingeführt werden kann, mit Datenverarbeitungsmitteln (100), welche das Speichern von Daten ermöglichen, die mindestens Identifikationsdaten des Benutzers im Telekommunikationsnetz (2) enthalten, dadurch gekennzeichnet,
dass die SIM-Karte (10) ausserdem mindestens einen Zähler. enthält, der inkrementiert wird, wenn eine nicht für die Verkehrsabwicklung zuständige Software-Ressource undloder Hardware-Ressource der SIM-Karte benutzt wird, und
dass aus dem Zählerwert ein dem Benutzer verzugebührender Betrag ermittelt wird, der einer Dienstgebühr und/oder Lizenzgebühr entspricht.

17. SIM-Karte gemäss dem vorhergehenden Anspruch, dadurch gekennzeichnet, dass mindestens eine vergebührte Hardware Ressource eine kontaktlose Schnittstelle (A-F) enthält.

18. SIM-Karte gemäss einem der Ansprüche 16 oder 17, dadurch gekennzeichnet, dass mindestens eine vergebührte Ressource für die Benutzung der SIM-Karte (10) in einem anderen System (11, 12, 13) zuständig ist.

19. SIM-Karte gemäss einem der Ansprüche 16 bis 18, dadurch gekennzeichnet, dass die Benutzung von mehreren Ressourcen (A-F) in der SIM-Karte unabhängig gezählt und belastet wird.

20. SIM-Karte gemäss einem der Ansprüche 16 bis 19, dadurch gekennzeichnet, dass mindestens ein Zähler in Abhängigkeit der Benutzungsdauer der entsprechenden vergebührten Ressource inkrementiert wird.

21. SIM-Karte gemäss einem der Ansprüche 16 bis 20, dadurch gekennzeichnet, dass mindestens eine vergebührte Ressource patentgeschützt ist und dass der belastete Betrag einer Lizenzgebühr für die Benutzung dieser Ressource entspricht.

22. SIM-Karte gemäss einem der Ansprüche 16 bis 21, dadurch gekennzeichnet, dass mindestens eine vergebührte Ressource von einem externen Dienstanbieter (3) angeboten wird, und dass der vergebührte Betrag einer Dienstgebühr für die Benutzung vom angebotenen Dienst entspricht.

23. SIM-Karte gemäss einem der Ansprüche 16 bis 22, dadurch gekennzeichnet, dass bei der Benutzung von mindestens einer einzigen Ressource mehrere Zähler (1002, 1002'), die verschiedenen Arten von Gebühren entsprechen, inkrementiert werden.

24. SIM-Karte gemäss einem der Ansprüche 16 bis 23, dadurch gekennzeichnet, dass sie ausserdem Mittel enthält, um den vergebührten Betrag aus einem Prepaid-Konto auf der SIM-Karte (10) zu belasten.

25. SIM-Karte gemäss einem der Ansprüche 16 bis 24, dadurch gekennzeichnet, dass sie ausserdem Mittel enthält, um einen Belastungsbeleg mit dem verzugebührenden Betrag vorzubereiten und um den Belastungsbeleg an eine Belastungszentrale (42) im benannten Telekommunikationsnetz (2) zu übermitteln.

26. SIM-Karte gemäss dem vorhergehenden Anspruch, dadurch gekennzeichnet, dass sie ausserdem Mittel enthält, um den vom Zähler gezählten Betrag mit einem vordefinierten Betrag zu vergleichen, und um den benannten Belastungsbeleg vorzubereiten, sobald der vom Zähler gezählte Betrag den vordefinierten Betrag übersteigt.

27. SIM-Karte gemäss einem der Ansprüche 25 oder 26, dadurch gekennzeichnet, dass die Belastungsbelege mit SMS-Meldungen durch die genannte Belastungszentrale im benannten Telekommunikationsnetz übermittelt werden.

28. SIM-Karte gemäss einem der Ansprüche 16 bis 27, dadurch gekennzeichnet, dass die belasteten Beträge von einer in der SIM-Karte gespeicherten Gebührentabelle (1000) abhängig sind.

29. SIM-Karte gemäss dem vorhergehenden Anspruch, dadurch gekennzeichnet, dass die benannte Gebührentabelle (1000) ferngesteuert mit SMS-Meldungen aus einem anderem Punkt im Telekommunikationsnetz geändert werden kann.

30. SIM-Karte gemäss einem der Ansprüche 25 bis 29, dadurch gekennzeichnet, dass sie TTP-Verschlüsselungsmittel enthält, mit welchen die Belastungsbelege signiert und verschlüsselt werden können.

## Revendications

1. Procédé d'imputation servant à facturer à l'utilisateur, dans un réseau de télécommunications (2), l'utilisation de ressources (A-F) n'ayant pas trait à l'écoulement du trafic sur une carte SIM (10), caractérisé en ce qu'il est facturé à l'utilisateur des ressources en logiciel ou des ressources en matériel, ou les deux, de la carte SIM (10), en ce qu'au moins un compteur, sur la carte SIM (10), avance quand une ressource indiquée payante en logiciel ou en matériel, ou les deux, de la carte SIM (10) sont utilisées, et en ce qu'est déterminé, à partir de l'indication du compteur, le montant à facturer, qui correspond à une redevance pour le service ou à un droit de licence.

2. Procédé d'imputation selon la première revendication, caractérisé en ce qu'au moins une ressource facturée est une interface sans contact (A-F).

3. Procédé d'imputation selon l'une des revendications précédentes, caractérisé en ce qu'au moins une ressource facturée a trait à l'utilisation de la carte SIM (10) dans un autre système (11, 12, 13).

4. Procédé d'imputation selon l'une des revendications précédentes, caractérisé en ce que plusieurs ressources (A-F) peuvent être facturées sur la carte SIM (10) de manière indépendante.

5. Procédé d'imputation selon l'une des revendications précédentes, caractérisé en ce qu'au moins un compteur avance en fonction de la durée d'utilisation de la ressource facturée correspondante.

6. Procédé d'imputation selon l'une des revendications précédentes, caractérisé en ce qu'au moins une ressource facturée est couverte par un ou plusieurs brevets et que le montant facturé correspond à un droit de licence pour l'utilisation de cette ressource.

7. Procédé d'imputation selon l'une des revendications précédentes, caractérisé en ce qu'au moins une ressource facturée est offerte par une entreprise de services extérieure (3), et en ce que la ressource facturée correspond à une redevance pour l'utilisation du service offert.

8. Procédé d'imputation selon l'une des revendications précédentes, caractérisé en ce que, lors de l'utilisation d'au moins une seule ressource, plusieurs compteurs (1002, 1002') correspondant à divers genres de redevances avancent.

9. Procédé d'imputation selon l'une des revendications précédentes,
caractérisé en ce que le montant à facturer peut être affiché sur un appareil mobile (1) dans lequel se trouve la carte SIM (10).

10. Procédé d'imputation selon l'une des revendications précédentes, caractérisé ence que le montant à facturer est débité à un compte prépayé qui se trouve sur la carte SIM.

11. Procédé d'imputation selon l'une des revendications précédentes, caractérisé en ce qu'un relevé de débit portant le montant à facturer est établi et envoyé à une centrale de débit (42), dans le réseau de télécommunications qui a été indiqué (2).

12. Procédé d'imputation selon la revendication précédente,
caractérisé en ce que le montant compté par le compteur est comparé à un montant fixé à l'avance et que le relevé de débit n'est établi que lorsque le montant compté par le compteur dépasse le montant fixé.

13. Procédé d'imputation selon la revendication 11 ou 12, caractérisé en ce que les relevés de débit sont transmis, avec des messages SMS, dans le réseau de télécommunications indiqué.

14. Procédé d'imputation selon l'une des revendications précédentes, caractérisé en ce que le montant à facturer est établi en fonction d'un tableau de redevances (1000) mis en mémoire sur la carte.

15. Procédé d'imputation selon la revendication précédente, caractérisé en ce que le tableau de redevances (1000) peut être modifié à distance, avec des messages SMS, à partir d'un autre point du réseau de télécommunications qui a été indiqué (2).

16. Carte SIM (10) destinée aux utilisateurs d'un réseau de télécommunications (2) et pouvant être introduite dans un terminal (1) de manière amovible, pourvue de moyens de traitement des données (100) qui permettent la mise en mémoire de données comportant au moins des données d'identification de l'utilisateur dans le réseau de télécommunications (2), caractérisé en ce que la carte SIM (10) possède en outre au moins un compteur qui avance quand une ressource de logiciel ou une ressource de matériel de la carte SIM, ou les deux, n'ayant pas trait à l'écoulement du trafic, sont utilisées, et en ce qu'un montant à facturer à l'utilisateur, correspondant à une redevance de service ou à un droit de licence, ou aux deux, est établi à partir de la position du compteur.

17. Carte SIM selon la revendication précédente, caractérisée en ce qu'au moins une ressource de matériel facturée comporte une interface sans contact (A-F).

18. Carte SIM selon la revendication 16 ou 17, caractérisée en ce qu'au moins une ressource facturée est affectée à l'utilisation de la carte SIM (10) dans un autre système (11, 12, 13).

19. Carte SIM selon l'une des revendications 16 à 18, caractérisée en ce que l'utilisation de plusieurs ressources (A-F) est comptée et débitée de manière indépendante sur la carte SIM.

20. Carte SIM selon l'une des revendications 16 à 19, caractérisée en ce qu'au moins un compteur avance en fonction de la durée d'utilisation de la ressource facturée correspondante.

21. Carte SIM selon l'une des revendications 16 à 20, caractérisée en ce qu'au moins une ressource facturée est protégée par un ou plusieurs brevets et que le montant débité correspond à un droit de licence pour l'utilisation de cette ressource.

22. Carte SIM selon l'une des revendications 16 à 21, caractérisée en ce qu'au moins une ressource facturée est offerte par une entreprise de services extérieure (3) et en ce que le montant facturé correspond à une redevance pour l'utilisation du service offert.

23. Carte SIM selon l'une des revendications 16 à 22, caractérisée en ce que, lors de l'utilisation d'au moins une seule ressource, plusieurs compteurs (1002, 1002') correspondant à différentes sortes de redevances ou droits avancent.

24. Carte SIM selon l'une des revendications 16 à 23, caractérisée en ce qu'elle comprend en outre des moyens permettant de débiter le montant facturé à un compte prépayé sur la carte SIM (10).

25. Carte SIM selon l'une des revendications 16 à 24, caractérisée en ce qu'elle comprend en outre des moyens servant à établir un relevé de débit où figure le montant à facturer et à transmettre ce relevé à une centrale de débit (42) dans le réseau de télécommunications indiqué (2).

26. Carte SIM selon la revendication précédente, caractérisée en ce qu'elle comprend en outre des moyens servant à comparer le montant compté par le compteur à un montant défini à l'avance et à établir le relevé de débit dès que le montant compté par le compteur dépasse le montant fixé à l'avance.

27. Carte SIM selon la revendication 25 ou 26, caractérisée en ce que les relevés de débit sont transmis avec des messages SMS, en passant par la centrale de débit, dans le réseau de télécommunications indiqué.

28. Carte SIM selon l'une des revendications 16 à 27, caractérisée en ce que les montants débités sont fonction d'un tableau des redevances (1000) qui est en mémoire sur la carte SIM.

29. Carte SIM selon la revendication précédente, caractérisée en ce que le tableau des redevances (1000) peut être modifié à distance, au moyen de messages SMS, depuis un autre point du réseau de télécommunications.

30. Carte SIM selon l'une des revendications 25 à 29, caractérisée en ce qu'elle comporte des moyens de codage de tiers habilité (TTP) qui permettent de signer et de coder les relevés de débit.

## Claims

1. Billing method for billing the user for the usage of resources (A-F) in a SIM card (10) in a telecommunications network (2), which resources are not responsible for the traffic process, characterised in that
the user is billed for software resources and/or hardware resources of the SIM card 10,
at least one counter in the SIM card is incremented when a said billed-for software resource and/or hardware resource is used in the SIM card (10), and
the amount to be billed is determined from the counter value, which amount corresponds to a service fee and/or license fee.

2. Billing method according to claim 1, characterised in that at least one billed-for resource is a contactless interface (A-F).

3. Billing method according to one of the preceding claims,
characterised in that at least one billed-for resource is responsible for the use of the SIM card (10) in another system (11, 12, 13).

4. Billing method according to one of the preceding claims,
characterised in that a plurality of resources (A-F) can be billed for independently in the SIM card (10).

5. Billing method according to one of the preceding claims,
characterised in that at least one counter is incremented depending on the duration of the usage of the respective billed-for resource.

6. Billing method according to one of the preceding claims,
characterised in that at least one billed-for resource is protected by patent and that the billed amount corresponds to a license fee for the use of this resource.

7. Billing method according to one of the preceding claims,
characterised in that at least one billed-for resource is offered by an external service provider (3) and that the billed amount corresponds to a service fee for the use of the offered service.

8. Billing method according to one of the preceding claims,
characterised in that with the use of at least one single resource a plurality of counters (1002, 1002') are incremented, which counters correspond to different types of fees.

9. Billing method according to one of the preceding claims,
characterised in that the amount to be billed can be displayed on a mobile device (1) in which the SIM card (10) is inserted.

10. Billing method according to one of the preceding claims,
characterised in that the amount to be billed is charged to a pre-paid account in the SIM card.

11. Billing method according to one of the preceding claims,
characterised in that a billing record with the amount to be billed is prepared and transmitted to a billing centre (42) in said telecommunications network (2).

12. Billing method according to the preceding claim, characterised in that the amount counted by the counter is compared to a pre-defined amount and that said billing record is only prepared when the amount counted by the counter exceeds the pre-defined amount.

13. Billing method according to one of the claims 11 or 12,
characterised in that the billing record is transmitted via said telecommunications network by means of SMS messages.

14. Billing method according to one of the preceding claims,
characterised in that the amount to be billed is determined depending on a fee table (1000) stored in the card.

15. Billing method according to the preceding claim, characterised in that said fee table (1000) can be changed, remotely controlled, by means of SMS messages from another location in said telecommunications network (2).

16. SIM card (10) for users of a telecommunications network (2) which can be inserted into a terminal device (1) in a removable manner and which comprises data processing means (100) enabling the storing of data, which data contains at least identification data of the user in the telecommunications network (2), characterised in that
the SIM card (10) further contains at least one counter, which is incremented when a software resource and/or hardware resource, not responsible for the traffic process, of the SIM card is used, and
an amount to be billed to the user is determined from the counter value, which amount corresponds to a service fee and/or license fee.

17. SIM card according to the preceding claim, characterised in that at least one billed-for hardware resource contains a contactless interface (A-F).

18. SIM card according to one of the claims 16 or 17, characterised in that at least one billed-for resource is responsible for the use of the SIM card (10) in another system (11, 12, 13).

19. SIM card according to one of the claims 16 to 18, characterised in that the usage of a plurality of resources (A-F) is counted and billed for independently in the SIM card.

20. SIM card according to one of the claims 16 to 19, characterised in that at least one counter is incremented depending on the duration of the usage of the respective billed-for resource.

21. SIM card according to one of the claims 16 to 20, characterised in that at least one billed-for resource is protected by patent and that the billed amount corresponds to a license fee for using this resource.

22. SIM card according to one of the claims 16 to 21, characterised in that at least one billed-for resource is offered by an external service provider (3) and that the billed amount corresponds to a service fee for using the offered service.

23. SIM card according to one of the claims 16 to 22, characterised in that with the use of at least one single resource, a plurality of counters (1002, 1002') are incremented, which counters correspond to different types of fees.

24. SIM card according to one of the claims 16 to 23, characterised in that it additionally comprises means to debit the billed amount from a pre-paid account in the SIM card (10).

25. SIM card according to one of the claims 16 to 24, characterised in that it further comprises means to prepare a billing record with the amount to be billed and to transmit the billing record to a billing centre (42) in said telecommunications network (2).

26. SIM card according to the preceding claim, characterised in that it further comprises means to compare the amount counted by the counter with a pre-defined amount and to prepare said billing record as soon as the amount counted by the counter exceeds the pre-defined amount.

27. SIM card according to one of the claims 25 or 26, characterised in that the billing records are transmitted via said billing centre in said telecommunications network by means of SMS messages.

28. SIM card according to one of the claims 16 to 27, characterised in that the billed amounts are dependent upon a fee table (1000) stored in the SIM card.

29. SIM card according to the preceding claim, characterised in that said fee table (1000) can be changed, remotely controlled, by means of SMS messages from another location in the telecommunications network.

30. SIM card according to one of the claims 25 to 29, characterised in that it comprises TTP encryption means, by means of which the billing records can be signed and encrypted.
